(19) **Europäisches Patentamt / European Patent Office / Office européen des brevets**

(11) **EP 4 576 822 A1**

(12) **EUROPEAN PATENT APPLICATION**

(43) Date of publication:
**25.06.2025   Bulletin 2025/26**

(21) Application number: **24218554.4**

(22) Date of filing: **10.12.2024**

(51) International Patent Classification (IPC):
*H04R 3/00* (2006.01)      *H04R 5/04* (2006.01)
*H04S 7/00* (2006.01)      *H04R 1/40* (2006.01)

(52) Cooperative Patent Classification (CPC):
**H04R 3/005; H04R 5/04; H04S 7/303;** H04R 1/406;
H04R 2203/12; H04R 2430/03; H04R 2499/11;
H04S 2400/11; H04S 2400/15; H04S 2420/01;
H04S 2420/03; H04S 2420/07

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.12.2023   GB 202319500**

(71) Applicant: **Nokia Technologies Oy
02610 Espoo (FI)**

(72) Inventors:
• **VILKAMO, Juha Tapio
00120 Helsinki (FI)**
• **LAITINEN, Mikko-Ville
02130 Espoo (FI)**

(74) Representative: **Nokia EPO representatives
Nokia Technologies Oy
Karakaari 7
02610 Espoo (FI)**

(54) **SPATIAL AUDIO PROCESSING**

(57)    Examples of the disclosure relate to spatial audio processing. An apparatus obtains at least two audio signals based on signals from at least two microphones. The apparatus performs a first spatial audio processing of the obtained audio signals for at least a first frequency range to generate a first output and performs a second spatial audio processing of the obtained audio signals for at least a second frequency range to generate a second output. The signal processing operations of the first spatial audio processing comprises processing based on parametric audio and the signal processing operations of the second spatial audio processing comprises processing based on beamforming audio. The apparatus combines the first output and the second output to generate a combined output.

**Description**

TECHNOLOGICAL FIELD

Examples of the disclosure relate to spatial audio processing. Some relate to spatial audio processing in systems with limited microphone arrangements.

BACKGROUND

Spatial audio requires audio signals captured by multiple microphones. Some audio capture devices, such as mobile phones, have a limited number of microphones and the microphones are located in positions that are not optimized for spatial audio capture. These modest microphone arrangements can lead to quality issues in the captured spatial audio.

BRIEF SUMMARY

According to various, but not necessarily all, examples of the disclosure there is provided an apparatus comprising means for:

obtaining at least two audio signals based on signals from at least two microphones;
performing a first spatial audio processing of the obtained audio signals for at least a first frequency range to generate a first output;
performing a second spatial audio processing of the obtained audio signals for at least a second frequency range to generate a second output, wherein the signal processing operations of the first spatial audio processing comprises processing based on parametric audio and the signal processing operations of the second spatial audio processing comprises processing based on beamforming audio; and
combining the first output and the second output to generate a combined output.

The processing based on parametric audio may vary more over time than the processing based on beamforming audio.

The respective outputs may comprise at least one of:

binaural outputs;
multi-channel outputs; and
stereo outputs.

The second spatial audio processing might not be performed for at least some of the first frequency range.

The first spatial audio processing might not be performed for at least some of the second frequency range.

The combining may comprise using the first output for the first frequency range and the second output for the second frequency range.

The combining may comprise applying a weighting to the first output and the second output so that the first output has a higher weighting than the second output in a frequency range and the second output has a higher weighting than the first output in another frequency range.

The means may be for determining an orientation of the microphone arrangement and applying a mode of at least one of the first spatial audio processing or the second spatial audio processing based on the determined orientation.

At least one of the first frequency range or the second frequency range may be different for different modes of first spatial audio processing or the second spatial audio processing.

A first mode may comprise using the first spatial audio processing for the first frequency range and a second spatial audio processing for the second frequency range and a second mode comprises using the first spatial audio processing for both the first frequency range and the second frequency range.

A first mode may use a first set of coefficients for the second spatial audio processing and a second mode may use a second set of coefficients for the second spatial audio processing.

The means may be for adjusting at least one of the first spatial audio processing or the second spatial audio processing based on the head orientation of a listener.

According to various, but not necessarily all, examples of the disclosure there is provided an electronic device comprising an apparatus as described herein wherein the electronic device is at least one of: smart phone, personal computer, image capturing device.

According to various, but not necessarily all, examples of the disclosure there is provided a method comprising:

obtaining at least two audio signals based on signals from at least two microphones;

performing a first spatial audio processing of the obtained audio signals for at least a first frequency range to generate a first output;

performing a second spatial audio processing of the obtained audio signals for at least a second frequency range to generate a second output, wherein the signal processing operations of the first spatial audio processing comprises processing based on parametric audio and the signal processing operations of the second spatial audio processing comprises processing based on beamforming audio; and

combining the first output and the second output to generate a combined output.

According to various, but not necessarily all, examples of the disclosure there is provided a computer program comprising instructions which, when executed by an apparatus, cause the apparatus to perform at least:

obtaining at least two audio signals based on signals from at least two microphones;

performing a first spatial audio processing of the obtained audio signals for at least a first frequency range to generate a first output;

performing a second spatial audio processing of the obtained audio signals for at least a second frequency range to generate a second output, wherein the signal processing operations of the first spatial audio processing comprises processing based on parametric audio and the signal processing operations of the second spatial audio processing comprises processing based on beamforming audio; and

combining the first output and the second output to generate a combined output.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

BRIEF DESCRIPTION

Some examples will now be described with reference to the accompanying drawings in which:

FIG. 1 shows an example electronic device;
FIG. 2 shows an example method;
FIG. 3 shows an example processor;
FIG. 4 shows an example beamforming-based spatial processing block;
FIG. 5 shows an example parametric-based spatial processing block;
FIGS. 6A and 6B show example beam pattern designs; and
FIG. 7 shows an example apparatus.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Corresponding reference numerals are used in the figures to designate corresponding features. For clarity, all reference numerals are not necessarily displayed in all figures.

DETAILED DESCRIPTION

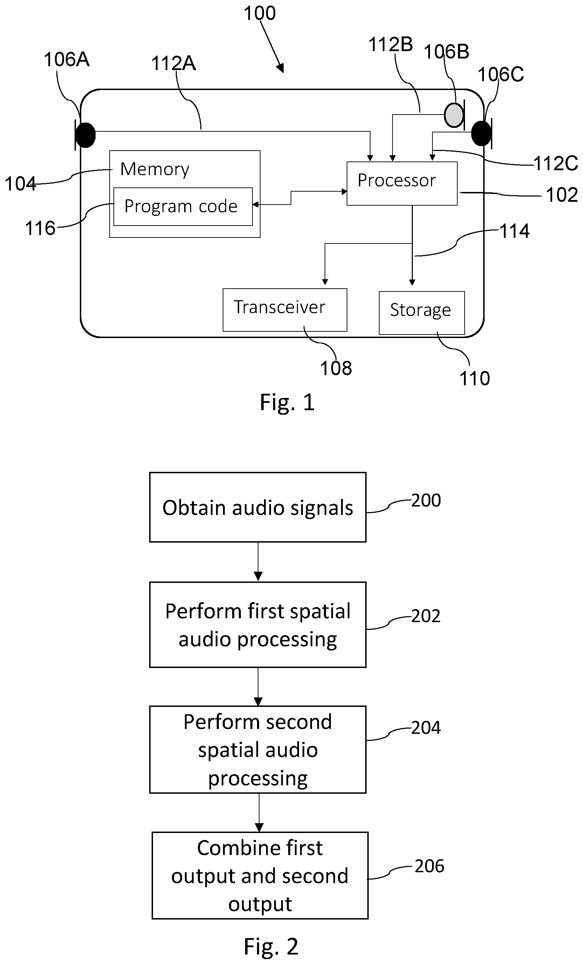

Fig. 1 shows an example electronic device 100. The example electronic device 100 can comprise an audio capture device that can be configured to capture audio for spatial audio signals. The electronic device 100 can be, a smart phone, a personal computer, an image capturing device, a teleconference device, a capture device integrated in a vehicle or any other suitable type of device comprising at least two microphones.

In the example of Fig. 1 the electronic device 100 comprises a processor 102, a memory 104, multiple microphones 106, a transceiver 108 and storage 110. Only components of the electronic device 100 that are referred to below are shown in Fig. 1. The electronic device 100 can comprise additional components that are not shown.

The microphones 106 can comprise any means that can be configured to detect audio signals. The microphones 106 provide microphone audio signals 112 as an output. The microphone audio signals 112 are based on the detected audio signals.

In the example of Fig. 1 the electronic device 100 comprises three microphones 106. The microphones 100 can be positioned within the electronic device 100 so as to enable spatial audio capture. In the example of Fig. 1 a first microphone 106A is provided at a first end of the electronic device 100, a second microphone 106B is provided at a second end of the electronic device 100, a third microphone 106C is provided on the rear of the electronic device 100. In this example, the microphones 106A-C are positioned on, or close to, a single axis. Other numbers and arrangements of microphones 106 could be used in other examples of the disclosure.

The electronic device 100 is configured so that the microphone audio signals 112 from the microphones 106 are provided to the processor 102 as an input. The microphone audio signals 112 can be provided to the processor 102 in any suitable format. In some examples the microphone audio signals 112 can be provided to the processor 102 in a digital format. The digital format could comprise pulse code modulation (PCM) or any other suitable type of format. In other examples the microphones 106 could comprise analog microphones 106. In such examples an analog-to-digital converter can be provided between the microphones 106 and the processor 102.

The processor 102 can be configured to process the microphone audio signals 112 to perform spatial audio processing of the microphone audio signals 112. The spatial audio processing comprises processing the microphone audio signals 112 so as to enable spatial properties of the captured audio to be rendered. This can enable a listener to perceive the spatial properties of the audio. For example, the listener can perceive different directions or positions for audio sources.

The processor 102 can be configured to access program code 116 stored in the memory 104. The processor 102 can use the program code 116 to perform spatial audio processing of the microphone audio signals 112. The processor 102 can use the program code 116 to implement examples of the disclosure. The processor 102 can be configured to use methods as shown in Figs. 2 to 5 and/or as described herein, to perform the spatial audio processing.

The processor 102 processes the microphone audio signals 112 to provide a processed audio signal 114 as an output. Other types of processing could also be applied to the microphone audio signals 112 by the processor 102. For example, the processor 102 could also perform speech enhancement, noise reduction, and/or any other suitable procedure.

The processed audio signal 114 can be provided in any suitable format. The processed audio signal 114 can be provided in an encoded form such as an Immersive Voice and Audio Stream (IVAS), a binaural audio signal, a surround sound loudspeaker signal, Ambisonic audio signals or any other suitable type of spatial audio output. Other formats for the processed audio signal 114 could also be used.

The electronic device 100 shown in Fig. 1 comprises a transceiver 108 and storage 110. The processor 102 is coupled to the transceiver 108 and/or storage 110 so that the processed audio signal 114, and/or any other outputs, from the processor 102 can be provided to the transceiver 108 and/or the storage 110.

The transceiver 108 can comprise any means that can enable data to be transmitted from the electronic device 100. This can enable the processed audio signal 114, and/or any other suitable data, to be transmitted from the electronic device 100 to an audio rendering device or any other suitable device.

The storage 110 can comprise any means for storing the processed audio signal 114 and/or any other outputs from the processor 102. The storage 110 could comprise one or more memories or any other suitable means. The processed audio signal 114 can be retrieved from the storage 110 at a later time. This can enable the electronic device 100 to render the processed audio signal 114 at a later time or can enable the processed audio signal 114 to be transmitted to another device.

In some examples the processed audio signal 114 can be associated with other information. For instance, the processed audio signal 114 can be associated with images such as video images. The images or video images could be captured by a camera of the electronic device 100. The processed audio signal 114 can be associated with the other information so that the processed audio signal 114 can be stored with this information and/or can be transmitted with this other information. The association can enable the images or other information to be provided to a user of the playback device when the processed audio signal 114 is played back.

Devices other than the electronic device 100 shown in Fig. 1 can be used to implement examples of the disclosure. For instance, in the example of Fig. 1 the processor 102 obtained the audio signals 112 from the microphones 106 of the device 100. In other examples the processor 102 could receive the audio signals 112 from a different source, such as the transceiver 108 or the storage 110.

The example electronic device 100 of Fig. 1 comprises a modest arrangement of microphones 106 that can be used to capture spatial audio. The limited number of microphones 106 and their positions are not ideal for spatial audio capture. For example, there will be a large portion of frequencies for which the arrangement of the microphones 106 is too sparse. In some example devices 100 the arrangement of the microphones 106 could be too small and/or too sparse.

Parametric spatial audio capture can be used with such arrangements of microphones 106 however this is not ideal for all circumstances. For instance, if there is a single sound source then parametric spatial audio capture can be used to accurately determine the direction. This results in a stable reproduction of the sound source. However, if there are multiple sound sources that are active at the same time the direction metadata can fluctuate which can cause perceivable instabilities in reproduction of the sound sources.

Examples of the disclosure address these issues and provide methods of spatial audio processing that can provide high quality, stable reproductions even with a limited microphone arrangement.

In examples of the disclosure the electronic device 100 can be operated in multiple orientations. The electronic device 100 is shown in a landscape orientation in Fig.1. The electronic device 100 could also be used in other orientation such as a portrait orientation, a main camera orientation or a selfie camera orientation. Other types of electronic devices 100 could be arranged in different orientations. The methods and processes described herein can be initialized differently for different orientations of the electronic device 100. In some examples, the methods described herein could be used if the electronic device 100 is in a first orientation and not used if the electronic device 100 is in a second orientation.

For example, in the electronic device 100 in Fig. 1 the microphones 106 are located in approximately the horizontal plane when the electronic device 100 is in the landscape orientation. This arrangement of microphones 106 does not support horizontal spatial audio capture very well when the electronic device 100 is arranged in a portrait orientation. Other example electronic devices 100, could comprise two microphones 106 at one edge of the electronic device 100 (for example, the right edge of an electronic device 100 as shown in Fig. 1) with suitable spacing so that the processing according to the present disclosure can also be performed also when the electronic device 100 is in the portrait orientation. However, even in this case the algorithms would initialize differently because the microphone 106 arrangement and spacing would be different in dependence of the orientation.

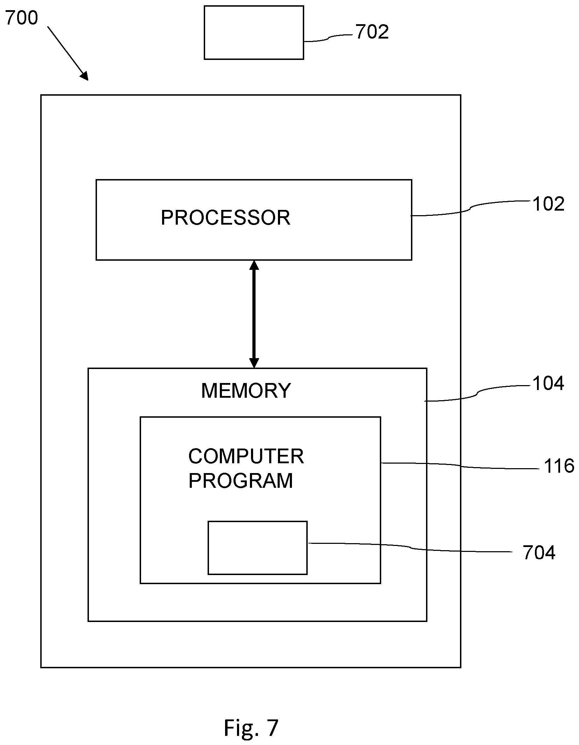

Fig. 2 shows an example method. The example method could be implemented by an electronic device 100 as shown in Fig. 1, by an apparatus 700 as shown in Fig. 7 or by any other suitable means.

At block 200 the method comprises obtaining at least two audio signals based on signals from at least two microphones 106. The microphones 106 can be arranged in a modest or limited arrangement or could be in any other suitable type of arrangement.

At block 202 the method comprises performing a first spatial audio processing of the obtained audio signals for at least a first frequency range to generate a first output. At block 204 the method comprises performing a second spatial audio processing of the obtained audio signals for at least a second frequency range to generate a second output.

The first and second spatial audio processing can comprise different types of processing. The signal processing operations of the first spatial audio processing comprises processing based on parametric audio. The processing based on parametric audio can comprise obtaining parameters such as energy and direction parameters for multiple frequency bands, and using them and the audio signals to generate the first output.

The signal processing operations of the second spatial audio processing comprises processing based on beamforming audio. The processing based on parametric audio varies more over time than the processing based on beamforming audio. Processing based on beamforming audio refers to combining the microphone signals, typically in a frequency-by-frequency basis, with time-variant or time-invariant processing weights so that as the result audio signals are obtained that have certain spatial capture characteristics.

The frequency ranges for which the respective spatial audio processes are used can comprise subsets of the available frequency ranges. In such examples the second spatial audio processing is not performed for at least some of the first frequency range and/or the first spatial audio processing is not performed for at least some of the second frequency range.

The frequencies within a frequency range do not need to be continuous. For example, it could be that the second frequency range comprises the lowest and highest frequencies and the first frequency range comprises the frequency portion in between. In such cases the lowest and highest frequencies would be processed based on beam forming audio and the frequency portion in between would be processed based on parametric audio.

The frequencies within the respective ranges can be dependent upon the arrangement of the microphones 106, the orientation of the electronic device 100 and/or any other suitable factor. The frequencies that are to be used for the respective ranges can be selected using any suitable procedure.

At block 206 the method comprises combining the first output and the second output to generate a combined output. The combined output can comprise at least some of the first output for a first frequency range and at least some of the second output for a second frequency range.

The combining can comprise any suitable process. In some examples the combining can comprise using the first output for the first frequency range and the second output for the second frequency range. This type of combining could be used if there is no overlap in the respective frequency ranges.

In some examples the combining can comprise applying a weighting to the first output and the second output. The weightings can be applied so that the first output has a higher weighting than the second output in a frequency range and the second output has a higher weighting than the first output in another frequency range. The weightings can be applied so that the first output is the main or dominant source in one frequency range and the second output is the main or dominant source in another frequency range. The frequency ranges for which the weightings apply can be the first frequency range and the second frequency range or could be different frequency ranges.

The combined output can comprise any suitable type of output. For example, the combined output can comprise at least one of binaural outputs, multi-channel outputs, stereo outputs, or any other suitable type of outputs.

In some examples the method can comprise additional blocks that are not shown in Fig. 2. For example, the spatial audio processes could be dependent upon the orientation of the electronic device 100 or apparatus 700. In such examples the method can comprise determining an orientation of the microphone arrangement and applying a mode of at least one of the first spatial audio processing or the second spatial audio processing based on the determined orientation.

In some examples the different modes of the respective spatial audio processes could use different ranges. That is the first frequency range and/or the second frequency range would be different depending on whether the electronic device 100 or apparatus 700 is in a landscape or portrait orientation.

In some examples a first mode could be to use one of the respective spatial audio processes and a second mode could be not to use the respective spatial audio processes. For example, a first mode could comprise using the first spatial audio processing for the first frequency range and using the second spatial audio processing for the second frequency range and a second mode could comprises using the first spatial audio processing for both the first frequency range and the second frequency range. In this case the first spatial audio processing would be used for all frequencies and the second spatial audio processing would not be used.

In some examples the different modes could comprise modifications to the respective spatial audio processes. For instance, in a first mode a first set of coefficients could be used for the second spatial audio processing and in a second mode a second set of coefficients could be used for the second spatial audio processing. The coefficients could be used in mixing or processing matrices used in the spatial audio processes.

In some examples one or more of the spatial audio processes could be adjusted based on a head orientation of a listener or any other suitable factor.

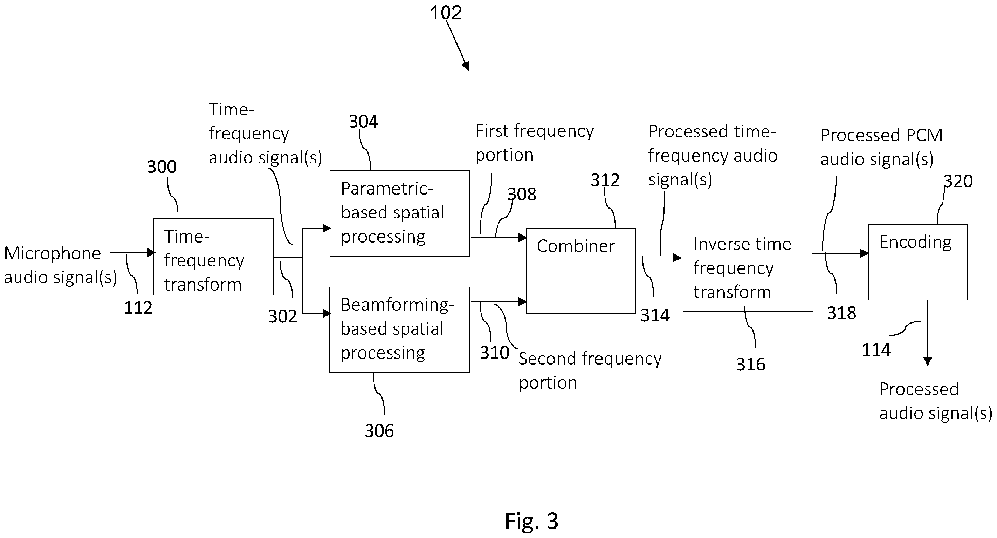

Fig. 3 schematically shows the operation of an example processor 102 according to examples of the disclosure. The processor 102 can be comprised in an electronic device 100 as shown in Fig. 1, or in any other suitable type of electronic device 100.

The processor 102 receives the microphone audio signals 112 as an input. The microphone audio signals 112 can be obtained from two or more microphones 106. The microphones 106 can be arranged in an electronic device 100 as shown in Fig. 1 or could be arranged in any other suitable arrangement. In some examples the microphone audio signals 112 can be retrieved from a memory 104 or could be received from another device.

The microphone audio signals 112 are provided as an input to a time-frequency transform block 300. The time-frequency transform block 300 is configured to convert the input microphone audio signals 112 from a time domain signal to a time-frequency domain signal. The time-frequency transform block 300 can be configured to apply any suitable time-frequency transform to convert the microphone audio signals 112 to time-frequency audio signals 302. For example, the transform used by the time-frequency transform block 300 could comprise a short-time Fourier transform (STFT) configured to take a frame of 1024 samples of the microphone audio signals 112 and concatenate this frame with the previous 1024 samples, and the applying a square-root of the 2*1024 length Hann window to the concatenated frames, and apply a fast Fourier transform (FFT) to the result. Other time-frequency transforms and their configurations can be used. The time-frequency transform block 300 provides time-frequency audio signals 302 as an output.

The time-frequency audio signals 302 are provided as an input to both a parametric-based spatial processing block 304 and a beamforming-based spatial processing block 306.

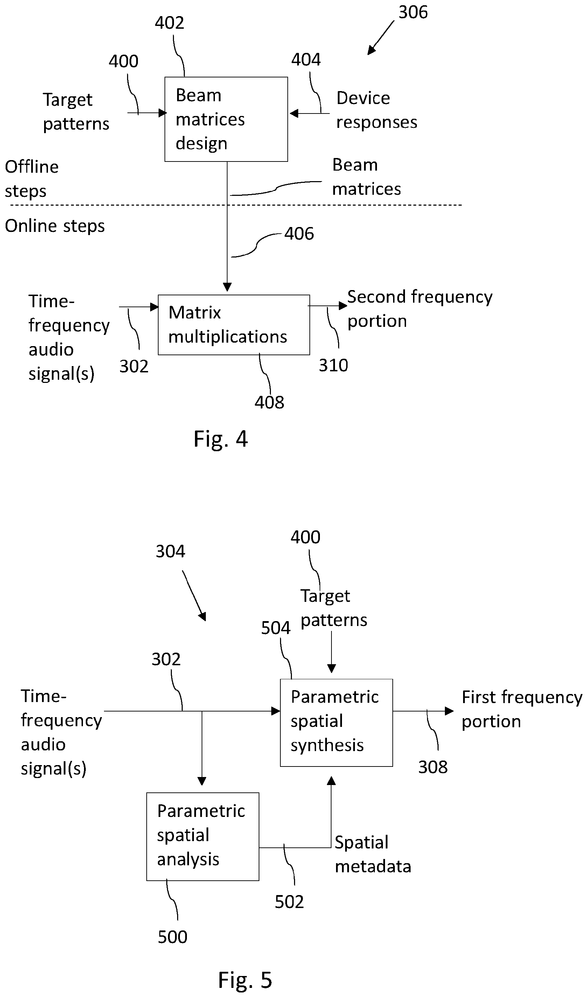

The parametric-based spatial processing block 304 can be configured to perform processing based on parametric audio. The processing based on parametric audio can comprise parametric capture and rendering. The parametric capture and rendering can use any suitable processes. The parametric capture and rendering can comprise estimating spatial parameters such as directions and direct-to-total energy ratios based on the microphone audio signals 112. These estimated parameters can then be used to synthesize a spatial audio output accordingly. Fig. 5 shows an example of a parametric-based spatial processing block 304 in more detail.

The processor 102 is configured so that the parametric-based spatial processing block 304 performs the processing based on parametric audio for a first frequency range.

The beamforming-based spatial processing block 306 can be configured to perform processing based on beam forming audio. The processing based on beam forming audio can comprise rendering based on measured or simulated responses of the electronic device 100 so that beam patterns are generated. In examples where the output processed audio signal 114 is a binaural audio signal the beam patterns that are generated can approximate the two complex-valued beam patterns (amplitude and phase) of the head-related transfer functions related to the left and right ears of a human listener. In other examples the beam patterns that are generated can comprise beam patterns that correspond to amplitude panning patterns suitable for stereo reproduction. Fig. 4 shows an example of a beamforming-based spatial processing block 306 in more detail.

The processor 102 is configured so that the beamforming-based spatial processing block 306 performs the processing based on beamforming audio for a second frequency range. The second frequency range can be different to the first frequency range. There can be some overlap between the first frequency range and the second frequency range.

The frequencies within a frequency range do not need to be continuous. For example, it could be that the second frequency range comprises the lowest and highest frequencies and the first frequency range comprises the frequency portion in between. In such cases the lowest and highest frequencies would be processed based on beam forming audio and the frequency portion in between would be processed based on parametric audio.

The frequencies within the respective ranges can be dependent upon the arrangement of the microphones 106, the orientation of the electronic device 100 and/or any other suitable factor.

The parametric-based spatial processing block 304 provides a first output. The output comprises a first frequency portion signal 308. The first frequency portion signal 308 comprises a parametric-based processed time-frequency audio signal. The beamforming-based spatial processing block 306 provides a second output. The second output comprises a second frequency portion signal 310. The second frequency portion signal 310 comprises a beamforming-based processed time-frequency audio signal.

Both the first frequency portion signal 308 and the second frequency portion signal 310 are provided to combiner 312. The combiner 312 is configured to combine the first frequency portion signal 308 and the second frequency portion signal 310. The combiner 312 therefore combines a first output that has been processed based on parametric audio and a second output that has been processed based on beamforming audio.

In some examples the first frequency range and the second frequency range might not overlap. In such examples the combiner 312 can generate a processed time-frequency audio signal 314 by making a frequency-dependent selection of the respective inputs. In some examples there could be some overlap between the first frequency range and the second frequency range. In such examples the combiner 312 can generate a processed time-frequency audio signal 314 by performing smooth transitioning between the respective signals. For some frequencies the combined output can be based on both inputs.

The combiner 312 provides a processed time-frequency audio signal 314 as an output. The processed time-frequency audio signal 314 is provided to an inverse time-frequency transform block 316.

The inverse time-frequency transform block 316 is configured to convert the processed time-frequency audio signal 314 to a time domain signal. The inverse time-frequency transform block 316 can be configured to apply any suitable inverse time-frequency transform to convert the processed time-frequency audio signal 314 to a time domain signal. The transform used by the inverse time-frequency transform block 316 can be the inverse of the transform used by the time-frequency transform block 300. If the time-frequency transform block 300 uses an STFT then the inverse time-frequency transform block 316 can use an inverse STFT.

The inverse time-frequency transform block 316 provides a processed PCM audio signal 318 as an output. In the example of Fig. 3 the processed PCM audio signal 318 is provided to an encoding block 320. The encoding block 320 is configured to encode the processed PCM audio signal 318. Any suitable procedure can be used for the encoding. For example, Advanced Audio Coding (AAC) or Immersive Voice and Audio Services (IVAS) could be used.

The encoding block 320 provides processed audio signals 114 as an output. The processed audio signals 114 can be the output of the processor 102 as shown in Fig. 1. The processed audio signals 114 can be directly reproduced (using a headphones or loudspeakers or any other suitable means), and/or they could be stored and/or transmitted to another device.

In some examples the encoding block 320 could be omitted. In such cases the processed PCM audio signal 318 could be the output of the processor 102.

Fig. 4 shows an example beamforming-based spatial processing block 306 in more detail. The processing of the beamforming-based spatial processing block 306 comprises some offline steps and some online steps. The offline steps only need to be performed once. The offline steps can be performed at an initialization stage of software that performs the processing according to the present disclosure. The offline steps can be performed even before compiling the processing software, so that the program code 116 only contains the resulting beam matrices or other coefficients that are to be used at the online processing stage. The offline steps could be performed at other times in other examples.

In the offline steps target patterns 400 and device response 404 are provided as an input to a beam matrices design block 402.

The target patterns 400 could comprise head-related transfer functions (HRTFs) or any other suitable type of patterns. The HRTFs comprise a set of complex value pairs for different frequencies and different directions. The respective HRTF pairs comprise the amplitude and phase responses corresponding to sound arriving to human ears from a defined direction, at a defined frequency.

The HRTFs or other target patterns 400 can be based on measurements (real person or dummy head) or simulation, or a mixture of measurements and simulation. For example, target patterns 400 for the lowest frequencies can be obtained from simulations, but the target patterns 400 for the higher frequencies can be from measurements.

The target patterns 400 could comprise loudspeaker-based beam patterns. Such target patterns 400 could be used when the use case is to capture multi-channel signals (such as stereo) instead of a binaural signal. Details of examples of these loudspeaker-patterns are described further below.

The device responses 404 are also provided as inputs to the beam matrices design block 402. Similar to the target patterns 400 the device response 404 can comprise a set of complex weights per direction and frequency and indicate the phase and amplitude of sounds arriving to the microphones 106 of an electronic device 100 at different directions and frequencies. The device responses 404 can also be based on measurements or simulation, or a mixture of measurements and simulation.

The beam matrices design block 402 is configured to use the input target responses 400 and device responses 404 to generate a set of coefficients for beam matrices for use by the beamforming-based spatial processing block 306.

The beam matrices design block 402 can use any suitable procedure. As an example, the target patterns 404 can be denoted as $\mathbf{t}(b, DOA)$ which is a column vector comprising two (or more) entries, where $b$ is the frequency bin index, and $DOA$ is the direction of the arriving sound which may indicate azimuth and elevation. In the present example, the target patterns 404 are for binaural or stereo output. Therefore, the column vector $\mathbf{t}(b, DOA)$ has two rows. A first row is for the left output channel and a second row is for the right output channel.

For binaural output, the vector $\mathbf{t}(b, DOA)$ comprises the complex-valued HRTFs for bin $b$ and the direction $DOA$.

For stereo loudspeaker output, the target patterns 404 could be defined by first converting the direction $DOA$ to a unit vector pointing towards the corresponding direction, finding $y(DOA)$ that is the y-dimension value of that unit vector, and then converting it to a cone-of-confusion azimuth value $\theta_{cc}(DOA) = \sin^{-1} y(DOA)$. Then, the target pattern is determined so that $\mathbf{t}(b, DOA) = \begin{bmatrix} 1 \\ 0 \end{bmatrix}$ if $\theta_{cc}(DOA) \geq 30°$; and $\mathbf{t}(b, DOA) = \begin{bmatrix} 0 \\ 1 \end{bmatrix}$ if $\theta_{cc}(DOA) \leq -30°$; and when $30° < \theta_{cc}(DOA) < 30°$ then $\mathbf{t}(b, DOA)$ values are the amplitude panning gains according to a suitable panning scheme, such as the tangent panning law assuming loudspeakers at $\pm 30°$. In this example of stereo loudspeaker output, the target patterns 404 do not depend on bin $b$. In some examples, the target patterns 404 for loudspeaker playback could also comprise a phase in dependence of bin $b$. For example, the phase of the target value could be phase of the left and right microphones of the electronic device 100 for the same frequency and direction.

The device responses 404 are the same regardless of the processing output. The device responses 404 can be denoted as a complex valued column vector $\mathbf{r}(b, DOA)$ comprising as many rows as there are microphones 106. In some cases, some microphones 106 signals are omitted. For example, an electronic device 100 could comprise three microphones 106 in the same plane and one further microphone 106 in a different plane and above one of the three microphones 106. In such examples this further microphone 106 can be omitted in the design of the beam matrices.

The beam matrices design block 402 is configured to design a beam matrix B(b) that aims to optimize the relation

$$\mathbf{t}(b, DOA) = \mathbf{B}(b)\mathbf{r}(b, DOA)$$

For any response $\mathbf{r}(b, DOA)$ from any $DOA$, the matrix $\mathbf{B}(b)$ maps the response to the target response $\mathbf{t}(b, DOA)$ at that same direction. Therefore, ideally the matrix $\mathbf{B}(b)$ is designed so that a sound that arrives from any direction is captured as if the capture was according to the target patterns 400.

The matrix $\mathbf{B}(b)$ only approximates this. Such a matrix can only feasibly be obtained when the wavelength is not too short with respect to the spacing of the microphones 106 (due to spatial aliasing), and not too long with respect to the spacing of the microphones 106 (due to diminishing inter-microphone difference signals and array noise).

For an electronic device 100 in landscape mode as shown in Fig. 1 the suitable frequency range to obtain the matrix $\mathbf{B}(b)$ is from around 0kHz to the around 1kHz or above. For smaller microphone array sizes and correspondingly smaller spacing of microphones 106, the suitable frequency range could start from a frequency higher than zero, but could also range to higher frequencies. When the output is stereo (not binaural), then the suitable frequency range for processing based on beamforming audio is typically smaller because the target patterns 404 that approximate amplitude panning are significantly more spatially selective at the lowest frequencies when compared to HRTF-based target patterns 404. At lowest frequencies the audio wavelength is long with respect to the size of the microphone array and achieving such spatially selective beams is no longer feasible. Therefore, for stereo rendering the lowest frequencies can be rendered using the processing based on parametric audio.

The matrix $\mathbf{B}(b)$ can be solved by first determining a suitable set of directions $DOA$ at which the operation of the matrix is optimized. What happens in between these directions is not separately optimized, and as such the number of directions should not be too sparse. A practical choice for the optimization is to obtain the $\mathbf{r}(b, DOA)$ and $\mathbf{t}(b, DOA)$ in the horizontal plane with suitable spacing (for example, 5 degrees intervals denoted $DOA_1, DOA_2, ... DOA_{72}$), and then stack the data into matrices

$$\mathbf{R}(b) = [\mathbf{r}(b, DOA_1) \quad \mathbf{r}(b, DOA_2) \quad ... \quad \mathbf{r}(b, DOA_{72})]$$

$$\mathbf{T}(b) = [\mathbf{t}(b, DOA_1) \quad \mathbf{t}(b, DOA_2) \quad ... \quad \mathbf{t}(b, DOA_{72})]$$

The solution then is

**EP 4 576 822 A1**

$$\mathbf{B}(b) = \mathbf{T}(b)inverse(\mathbf{R}(b))$$

where the operator *inverse()* could be the Moore-Penrose pseudoinverse, however, at least some regularization of the inverse is preferred. Omitting the bin index in the notation, one example is to first use a singular value decomposition $\mathbf{R} = \mathbf{USV}^H$, then performing inverse processing for the diagonal matrix $\mathbf{S}$. However, $\mathbf{S}$ is not necessarily a square matrix, depending on the number of microphones 106. The regularized inverse processing can be performed by transposing $\mathbf{S}$, and performing, for all the diagonal elements, the operation $\hat{s}_{i,i} = \frac{1}{\max(\alpha_s s_{max}, s_{j,j})}$, where $s_{j,j}$ is the $j$:th row $j$:th column element of $\mathbf{S}$; $s_{max}$ is the maximum $s_{j,j}$ for all $j$; and $\alpha_s$ is a regularization factor, which could be 0.01. The values $\hat{s}_{i,i}$ then replace all values $s_{i,i}$ of the transposed $\mathbf{S}$, and the result is then denoted $\hat{\mathbf{s}}^{-1}$. The regularized inverse is then *inverse*$(\mathbf{R}) = \mathbf{V}\hat{\mathbf{S}}^{-1}\mathbf{U}^H$.

The matrices $\mathbf{B}(b)$ are the beam matrices 406 that are provided as the output of the beam matrices design block 402. The beam matrices 406 are provided as an input to a matrix multiplication block 408. The matrix multiplication block 408 can be performed as part of the online processing.

The matrix multiplication block 408 also receives the time-frequency audio signals 302 as an input. The time-frequency audio signals 302 can be denoted as a column vector $\mathbf{s}(b, n)$ comprising as many rows as there are channels, and where $n$ is the current temporal frame index (of the time-frequency transform).

The matrix multiplication block 408 performs the processing by

$$\mathbf{s}_b(b, n) = \mathbf{B}(b)\mathbf{s}(b, n)$$

where the subscript $b$ denotes that the output is the beam-processed output.

The output of the matrix multiplication block 408 provides the resulting signal $\mathbf{s}_b(b, n)$ as an output signal. The output signal is the second frequency portion 310 as shown in Fig. 3.

The beam matrices 406 can be dependent upon the orientation of the electronic device 100. For example, if the electronic device 100 is in the landscape orientation as shown in Fig. 1 then a first set of beam matrices 406 can be determined and used for that orientation. If the microphone array also supports processing in a portrait orientation, then a second set of beam matrices 406 can be determined and used for that orientation. Similarly, different beam matrices 406 can be determined based on whether a main or selfie camera of the electronic device 100 is in use.

The respective orientations of the electronic device 100 can be associated with corresponding beam matrices 406 unless the microphone arrangement has enough symmetry that two or more different orientations acoustically match each other. In such situations these orientations of the electronic device 100 can be associated with the same beam matrices 406. In some of these cases the microphone channels can be mutually switched if the left and right directions are different for the different orientations.

In the method described above the regularization factor $\alpha_s$ used by the beam matrices design block 402 was set to 0.01. The regularization factor can be set to any value between 0 and 1, where the value 0 means no regularization, and 1 means maximum regularization. The value of the regularization factor depends on the use case. Smaller values mean more accurate approximation of a beam design but also higher amplification of potential incoherent noises such as wind noise or microphone noise. For example, an electronic device 100 for outdoor use could have a regularization factor $\alpha_s = 0.1$ and an electronic device 100 for indoor-use could have a regularization factor $\alpha_s = 0.01$. The same electronic device 100 can have more than one mode depending on where it is used. The best mode can be detected automatically (this could be detected based on wind noise detection or camera input or any other suitable input). In examples where smaller values of the regularization factor are used, for example if $\alpha_s = 0.01$, the processing can comprise means to avoid excessive noise amplification. For example, the input and output energies of the beam matrix processing can be monitored, and a limit can be applied as to how much louder the output can be. For example, a limiter could be configured so that the mean output of the beam matrix design block 402 would not be more than twice the mean input energy. This limiter would operate per frequency bin, and would remove any overshoots due to the noise, for example amplification of microphone noise.

Fig. 5 shows an example parametric-based spatial processing block 304 in more detail. The parametric processing used in the following examples could, in some examples, be replaced with other parametric processes.

The parametric-based spatial processing block 304 comprises a parametric spatial analysis block 500 and a parametric spatial synthesis block 504.

The parametric spatial analysis block 500 receives the time-frequency audio signals 302 and uses the time-frequency audio signals 302 to determine spatial metadata 502. The spatial metadata 502 can comprise a direction parameter and a direct-to-total energy ratio parameter for frequency bands $k$. One frequency band $k$ can contain multiple frequency bins $b$, and has the lowest frequency bin $b_{low}(k)$ and the highest bin $b_{high}(k)$. The frequency resolution of these bands could be one that follows the Bark frequency scale, or any other suitable frequency resolution. The typical practical design principle is that for higher bands $k$ there is a higher number of bins $b$ included within the bands.

Any suitable process can be used to determine the spatial metadata 502. In some examples the spatial metadata 502 can be determined as follows. In this example the spatial metadata 502 is determined using only a subset of the available microphone audio signals 112. For example, only the microphone audio signals 112 from the microphones 106 at the edge of the electronic device might be used.

$s(b, n, 1)$ and $s(b, n, 2)$ can denote the first and second row entries of $\mathbf{s}(b, n)$. Cross correlation can be formulated by

$$c(b, n) = s(b, n, 1)s^*(b, n, 2)$$

Then, a real-valued normalized correlation measure in the range from bin $b_0$ to $b_1$ for delay $d$ can be defined by

$$c_{norm}(b_0, b_1, d, n) = \frac{Real\left(\sum_{b=b_0}^{b_1} e^{i2\pi f(b)d} c(b, n)\right)}{\sum_{b=b_0}^{b_1} |c(b, n)|}$$

The delay search range can be selected based on the spacing of the microphones 106. The distance between a first microphone 106A and a second microphone 106B can be denoted $d_{mic}$. This distance could be 0.16 meters. Then, the search could be performed by determining 41 uniformly spaced azimuth search directions $\theta_d$ ranging from -90° to 90°, and then converting them to delay values by $d(\theta_d) = \frac{d_{mic}}{v_s} \sin^{-1} \theta_d$, where $v_s$ is the speed of sound.

For band $k$, for each $d = d(\theta_d)$, the following value is evaluated

$$c_{norm,k}(k, d, n) = c_{norm}\left(b_{low}(k), b_{high}(k), d, n\right)$$

Then, for each band $k$, the value of $d = d(\theta_d)$ for which the maximum value $c_{norm,k}(k, d, n)$ is obtained is evaluated. This value of $d$ is the obtained delay estimate for that band. Accordingly, for that band, the determined direction parameter $\theta(k, n)$ is then the corresponding $\theta_d$ and the direct-to-total ratio parameter $r(k, n)$ is the value of $c_{norm,k}(k, d, n)$, for that same $d$. The procedure is repeated for each band $k$.

In this example the direction parameter is only azimuth, and elevation analysis is not performed. The elevation angle can be set to zero. In other examples the elevation angle can also be estimated. Any suitable method can be used to estimate the elevation angle.

The determined direction parameter $\theta(k, n)$ and the ratio $r(k, n)$ provide the spatial metadata 502. The spatial metadata 502 is provided as the output from the parametric spatial analysis block 500.

In the described example the processing of the parametric spatial analysis block 500 provided the azimuth direction parameter $\theta(k,n)$ based on the delay estimations between the two microphones 106 at the edge of the electronic device 100. The angles were assumed to be at the front horizontal plane. This means that any sounds arriving from the rear directions are mirrored to the front. In some examples the parametric capture can resolve if the sound is arriving from the front or rear. In case it is determined that the sound arrives from the rear then the azimuth direction parameter $\theta(k,n)$ is mirrored to back (for example, sound at 30 degrees is mirrored to 150 degrees).

Any suitable process can be used to determine if an azimuth direction parameter $\theta(k, n)$ should be at the front or the rear. In the example electronic device 100 of Fig. 1 the process could comprise using delay analysis between the second microphone 106B and the third microphone 106C to determine if the sound at the time-frequency interval $(k, n)$ is at front or back. However, it is not critically important to perform such front-back determination for binaural rendering because the binaural cues are similar for the front and back directions within the same cone of confusion. Also, for stereo playback the rear directions are mirrored to the front.

In the example of Fig. 5 the parametric-based spatial processing block 304 determines the spatial metadata. In some examples the spatial metadata 502 could have been previously formulated so that the parametric-based spatial processing block 304 receives the spatial metadata 502 as an input. The previously formulated spatial metadata 502 could be formulated using any suitable procedure. In such examples the parametric-based spatial processing block 304 does not need to comprise a parametric spatial analysis block 500.

The parametric spatial synthesis block 504 receives the time-frequency audio signals 302, and the target patterns 400, and the spatial metadata 502 as inputs. The parametric spatial synthesis block 504 is configured to render a spatial audio output based on the respective inputs. Any suitable process can be used to render the spatial audio output.

As an illustrative example using the electronic device 100 of Fig. 1 for binaural rendering, the parametric spatial synthesis block 504 can perform only level manipulation. The time-frequency audio signals 302 that are used can comprise only the signals from the left microphone 106A and the right microphone 106B. The energies or levels of these signals are modified based on the spatial metadata 502. In this example configuration the spacing of the microphones 106A, 106B is similar to that of the human ears (and therefore, the inter-channel time differences are correct, or close to correct), but the head-shadowing effects are not correct. Therefore, the parametric spatial synthesis block 504 will modify the spectral cues.

For each frequency band $k$, the input energies are formulated for channel $i = 1,2$ by

$$E_{in}(k,n,i) = \sum_{b=b_{low}(k)}^{b_{high}(k)} |s(k,n,i)|^2$$

Then, the target energy is formulated using the spatial metadata 502 and the target patterns 400. The target patterns $\mathbf{t}(k, DOA)$ are available in frequency bands $k$. The target patterns 400 used by the parametric spatial synthesis block 504 can be the same as the target patterns 400 used by the beamforming-based spatial processing block 306, or could be derived form the same data set used for the target patterns used by the beamforming-based spatial processing block 306, or could be derived from a different data set.

From the target patterns $\mathbf{t}(k, DOA)$ the pattern with azimuth $\theta(k, n)$ and zero elevation is selected. If the target patterns 400 does not have exactly that data point available, the nearest $DOA$ may be selected or interpolation can be performed. The selected target pattern vector is denoted $\mathbf{t}(k, \theta(k, n))$. The target energy for band $k$ is then defined by

$$E_{out}(k,n,i) = \Big(t(k,\theta(k,n),i)^2 r(k,n) + 0.5\big(1 - r(k,n)\big)\Big)\Big(E_{in}(k,n,1) + E_{in}(k,n,2)\Big)$$

where $t(k, \theta(k,n), i)$ is the $i$:th row value of $\mathbf{t}(k, \theta(k,n))$. In this example, it was assumed that in case of HRTF reproduction the target patterns $\mathbf{t}(k, \theta(k, n))$ are diffuse field equalized so that its mean value over surrounding spatial directions is $\begin{bmatrix} \sqrt{0.5} \\ \sqrt{0.5} \end{bmatrix}$.

Then, the parametrically processed spatial audio output signals are obtained by

$$s_p(k,n,i) = g(k,n,i)s(k,n,i)$$

where

$$g(k,n,i) = \sqrt{\frac{E_{out}(k,n,i)}{E_{in}(k,n,i)}}$$

The division of the energies for obtaining $g(k, n, i)$ can be regularized by a small epsilon at the divisor and limiting the maximum value of $g(k, n, i)$, for example, to a value of 4.

The signal $s_p(k, n, i)$ is denoted in a vector form as $\mathbf{s}_p(b, n)$. This signal provides the first frequency portion 308 as shown in Fig. 3 and can be provided as the output of the parametric-based spatial processing block 304. In examples of the disclosure only a subset of the bins of $\mathbf{s}_p(b, n)$ need to be formulated, because a portion of the frequencies can be formulated by the beamforming-based spatial processing block 306.

In the above described examples binaural rendering could be used. Other types of spatial audio outputs could be used. For stereo rendering the above described examples could be modified as appropriate or a different method could be used.

The signal $\mathbf{s}_p(b,n)$ provides the first frequency portion 308 that has been processed based on parametric audio and the signal $\mathbf{s}_b(b, n)$ provides the second frequency portion 310 that has been processed based on beamforming audio. These respective signals can be combined by the combiner 312. The combiner 312 can use any suitable process. In some examples the combiner 312 can the bins from the different inputs so that the combined output is $\mathbf{s}_b(b, n)$ for bins where processing based on beamforming audio is feasible and the combined output is $\mathbf{s}_p(b,n)$ for bins where processing based on beamforming audio is not feasible. In some examples the combined output can be interpolated at some frequencies so that, for at least some frequencies, the combined output can comprise a mixture $\mathbf{s}_b(b, n)m(b) + \mathbf{s}_p(b, n)(1 - m(b))$, where $m$ ($b$) is a value that transitions from 0 to 1 or from 1 to 0 during an interpolation frequency interval.

In some examples of the disclosure the parametric-based spatial processing block 304 can perform the processing based on parametric audio for just the first frequency range and the beamforming-based spatial processing block 306 can perform the processing based on beamforming audio for just the second frequency range. In some examples one or both of the processing based on parametric audio or the processing based on beamforming audio can also be performed outside of the allocated frequency range.

For instance, in some examples the processing based on parametric audio can be performed for the entire frequency range. In such cases the processed audio signals 114 could be encoded with the spatial metadata 502 for the entire frequency range. This can enable the spatial metadata 502 to be used at a later stage and/or at a remote decoder to render the processed audio signals 114 to other formats.

In some cases, the examples of the disclosure could be implemented with head tracking. In such cases the beamforming-based spatial processing block 306 would determine the beam matrices 406 for different head orientations. The different head orientations could comprise orientations with 5-degree spacing for the yaw rotation.

The beamforming-based spatial processing block 306 could use the methods describe above, or any other suitable methods, but the target pattern 400 would be rotated based on the orientation of the head.

In such examples the beam matrices 406 would be used by the matrix multiplication block 408 as part of the online processing. To accommodate the head tracking the correct beam matrices 406 would be determined for the current head orientation. The correct beam matrices 406 can be selected by selecting the closest beam matrices 406 from the determined matrices, or via interpolation.

The parametric-based spatial processing block 304 can take head orientation into account by rotating the determined direction parameters $\theta(k, n)$ before applying them in the rendering. In some examples the parametric-based spatial processing block 304 could also perform some additional processing of the audio signals based on the head orientation before the rendering.

Therefore, examples of the disclosure can be used with head tracking. The head-tracked binaural rendering can be performed by processing the stored or retrieved microphone audio signals 112 in real-time based on the tracked head orientation of the listener.

In examples which use headtracking the frequency ranges for the respective types of spatial processing can change over time based on the head orientation of the listener and the positions of the microphones 106 in the electronic device 100. For example, the cross over frequency between the first frequency for which processing based on parametric audio is used and the second frequency for which processing based on beamforming audio is used can be changed. The change in the frequency ranges can take into account that the suitable frequency range for the processing based on beamforming audio can be different for different head orientations.

Although the examples described above have been described for binaural and stereo outputs other types of output could be used in other examples. The examples of the disclosure could be used to perform the processing for any multi-channel output, such as a 5.1 multi-channel loudspeaker setup. The processing steps could be as described above with the processing based on beamforming audio being used for a frequency range where suitable beam patterns can be achieved with the microphones 106 in use and the processing based on parametric audio is used at other frequencies.

In examples where the output is a multi-channel output, such as a 5.1 multi-channel output there are more output channels than would be used for a binaural output or a stereo output. The beam patterns used for the multi-channel output are narrower than the beam patterns used for binaural outputs or stereo outputs. This means that more microphones 106 might be needed to obtain the device responses 404 for such loudspeaker setups. Therefore, to implement examples of the disclosure for a multi-channel output the electronic device 100 might need more than three microphones 106. For example, the electronic device 100 might need five to ten microphones 106.

Examples of the disclosure can also be implemented with other types of signals. For instance, examples of the disclosure can be applied with cross-talk cancelled stereo reproduction. The cross-talk cancelled stereo can be used in electronic devices such as mobile phones that have stereo loudspeakers. The cross-talked cancelled stereo reproduction is applied in order to produce a perception of stereo image wider than the physical locations of the loudspeaker. With such a reproduction system, the processing would be as above, but the target patterns 400 for normal stereo reproduction would be replaced by the corresponding target patterns 400 for the cross-talk cancelled stereo reproduction in processing based on beamforming audio.

Examples of the disclosure can also be implemented with a soundbar reproduction system. In such examples the device responses 404 from the soundbar would be utilized for processing based on beamforming audio. The processing based on parametric audio could be performed using any suitable process.

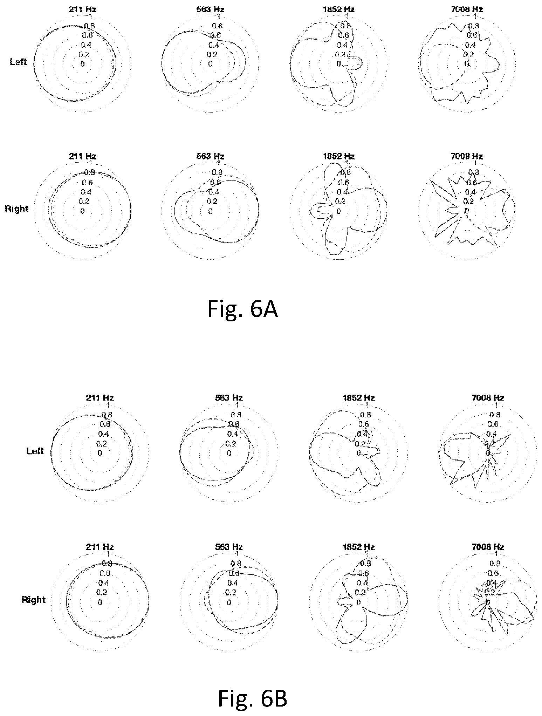

Figs. 6A and 6B show example beam pattern designs for approximating HRTF responses. The electronic device 100 used to obtain the beam patterns can be a mobile phone or similar shaped device. The electronic device 100 can be arranged in a landscape mode.

Fig. 6A shows example beam pattern designs for an electronic device 100 with two microphones 106. The two microphones 106 can be located at left and right edges of the electronic device 100. Fig. 6B shows example beam pattern designs for an electronic device 100 with six microphones 106. The arrangement of six microphones can comprise three microphones 106 located at edge left of the electronic device 100, three microphones 106 located at a right edge of the electronic device 100 the additional microphones 106 can be located on the front and back surfaces near to the edges.

In Figs. 6A and 6B the solid lines represent beam based HRFT capture patterns obtained with the respective microphone arrangements and the dashed lines represent actual HRTF capture patterns in the horizontal plane. The beam matrices can be designed as described above.

Figs. 6A and 6B show the respective patterns for left and right channels at multiple different frequencies. The frequencies shown are 211Hz, 563Hz, 1852Hz, and 7008Hz.

Figs. 6A and 6B show that there is not a single frequency where the processing based on beamforming audio no longer well approximates the target patterns. Instead, the patterns gradually turn into the aliased patterns. This can affect the frequencies that are chosen for the respective types of processing. In some examples one suitable choice for the first frequency range (for processing based on parametric audio) and the second frequency range (for processing based on beamforming audio) would be to have the first range as frequencies above 1kHz and the second range as frequencies below 1kHz.

The frequencies that are to be used for the respective ranges can be selected by inspecting the obtained beam patterns against the target patterns as shown in Figs. 6A and 6B. The frequencies where the processing based on beamforming audio sufficiently approximates the target patterns can be determined from this inspection. These frequencies can then be used as the second frequency range (for processing based on beamforming audio) and the other frequencies can be used as the first frequency range (for processing based on parametric audio). This method of selecting the frequency ranges can be used for any arrangement of microphones, orientation of electronic devices 100, and target pattern.

In the examples of Figs. 6A and 6B the obtained beam capture patterns can approximate the HRTF patterns at low frequencies. At 563Hz the microphone arrangement with six microphones 106 performs slightly better than the microphone arrangement with two microphones 106. At higher frequencies both arrays suffer significantly from the spatial aliasing. Therefore, at high frequencies the processing based on beamforming audio is not feasible for these form factors and microphone arrangements.

However, Figs. 6A and 6B show that the processing based on beamforming audio is feasible at low frequencies. This means that the processing based on parametric audio can be replaced at low frequencies with the processing based on beamforming audio. The provides the benefit that, for the selected frequency range, no matter how complex the sound scene is, the processing based on beamforming audio well represents the spatial sound scene and does not have the spatial capture artefacts (such as source instability) that can arise in processing based on parametric audio.

Fig. 7 schematically illustrates an apparatus 700 that could be used to implement examples of the disclosure. The apparatus 700 comprises at least one processor 102 and at least one memory 104. The processors 102 and the memory 104 can be as shown in Fig. 1. The apparatus 700 could comprise additional components that are not shown in Fig. 7. The apparatus 700 could be provided within an electronic device 100 such as a smart phone, a personal computer, an image capturing device, a teleconference device, a capture device integrated in a vehicle or any other suitable type of device comprising at least two microphones.

In the example of Fig. 7 the apparatus 700 comprises a processing apparatus. The apparatus 700 can be configured to process audio data. The apparatus 700 can be configured to process audio data for use in communication systems or for any other suitable purpose.

In the example of Fig. 7 the implementation of the apparatus 700 can be as processing circuitry. In some examples the apparatus 700 can be implemented in hardware alone, have certain aspects in software including firmware alone or can be a combination of hardware and software (including firmware).

As illustrated in Fig. 7 the apparatus 700 can be implemented using instructions that enable hardware functionality, for example, by using executable instructions of a computer program 116 in a general-purpose or special-purpose processor 102 that can be stored on a computer readable storage medium (disk, memory etc.) to be executed by such a processor 102.

The processor 102 is configured to read from and write to the memory 104. The processor 102 can also comprise an output interface via which data and/or commands are output by the processor 102 and an input interface via which data and/or commands are input to the processor 102.

The memory 104 is configured to store a computer program 116 comprising computer program instructions (computer program code 704) that controls the operation of the apparatus 700 when loaded into the processor 102. The computer program instructions, of the computer program 116, provide the logic and routines that enables the apparatus 700 to perform the methods described herein. The processor 102 by reading the memory 104 is able to load and execute the computer program 116.

The apparatus 700 therefore comprises: at least one processor 102; and at least one memory 104 storing instructions that, when executed by the at least one processor 102, cause an apparatus 700 at least to perform:

obtaining 200 at least two audio signals based on signals from at least two microphones;
performing 202 a first spatial audio processing of the obtained audio signals for at least a first frequency range to generate a first output;
performing 204 a second spatial audio processing of the obtained audio signals for at least a second frequency range to generate a second output, wherein the signal processing operations of the first spatial audio processing comprises processing based on parametric audio and the signal processing operations of the second spatial audio processing comprises processing based on beamforming audio; and

combining 206 the first output and the second output to generate a combined output.

As illustrated in Fig. 7 the computer program 116 can arrive at the apparatus 700 via any suitable delivery mechanism 702. The delivery mechanism 702 can be, for example, a machine-readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 116. The delivery mechanism can be a signal configured to reliably transfer the computer program 116. The apparatus 700 can propagate or transmit the computer program 116 as a computer data signal. In some examples the computer program 116 can be transmitted to the apparatus 700 using a wireless protocol such as Bluetooth, Bluetooth Low Energy, Bluetooth Smart, 6LoWPan (IP$_v$6 over low power personal area networks) ZigBee, ANT+, near field communication (NFC), Radio frequency identification, wireless local area network (wireless LAN) or any other suitable protocol.

The computer program 116 can comprise computer program instructions for causing an apparatus 700 to perform at least the following or for performing at least the following:

obtaining 200 at least two audio signals based on signals from at least two microphones;

performing 202 a first spatial audio processing of the obtained audio signals for at least a first frequency range to generate a first output;

performing 204 a second spatial audio processing of the obtained audio signals for at least a second frequency range to generate a second output, wherein the signal processing operations of the first spatial audio processing comprises processing based on parametric audio and the signal processing operations of the second spatial audio processing comprises processing based on beamforming audio; and

combining 206 the first output and the second output to generate a combined output.

The computer program instructions can be comprised in a computer program 116, a non-transitory computer readable medium, a computer program product, a machine readable medium. In some but not necessarily all examples, the computer program instructions can be distributed over more than one computer program 116.

Although the memory 104 is illustrated as a single component/circuitry it can be implemented as one or more separate components/circuitry some or all of which can be integrated/removable and/or can provide permanent/semi-permanent/ dynamic/cached storage.

Although the processor 102 is illustrated as a single component/circuitry it can be implemented as one or more separate components/circuitry some or all of which can be integrated/removable. The processor 102 can be a single core or multi-core processor.

References to "computer-readable storage medium", "computer program product", "tangibly embodied computer program" etc. or a "controller", "computer", "processor" etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term "circuitry" can refer to one or more or all of the following:

(a) hardware-only circuitry implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions and

(c) hardware circuit(s) and or processor(s), such as a microprocessor(s) or a portion of a microprocessor(s), that requires software (e.g. firmware) for operation, but the software might not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the Figs. can represent steps in a method and/or sections of code in the computer program 116. The illustration of a particular order to the blocks does not necessarily imply that there is a required or preferred order for the blocks and the order and arrangement of the block can be varied. Furthermore, it can be possible for some blocks to be omitted.

In the example of Fig. 7 the apparatus 700 is shown as a single entity. In other examples the apparatus 700 could be provided a plurality of different entities that could be distributed within a cloud or other suitable network.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

**Claims**

1. An apparatus comprising means for:
   obtaining at least two audio signals based on signals from at least two microphones;

   performing a first spatial audio processing of the obtained audio signals for at least a first frequency range to generate a first output;
   performing a second spatial audio processing of the obtained audio signals for at least a second frequency range to generate a second output, wherein the signal processing operations of the first spatial audio processing comprises processing based on parametric audio and the signal processing operations of the second spatial audio processing comprises processing based on beamforming audio; and
   combining the first output and the second output to generate a combined output.

2. An apparatus as claimed in claim 1, wherein the processing based on parametric audio varies more over time than the processing based on beamforming audio.

3. An apparatus as claimed in any preceding claim, wherein the respective outputs comprise at least one of:

   binaural outputs;
   multi-channel outputs; and

   stereo outputs.

4. An apparatus as claimed in any preceding claim, wherein the second spatial audio processing is not performed for at least some of the first frequency range.

5. An apparatus as claimed in any preceding claim, wherein the first spatial audio processing is not performed for at least some of the second frequency range.

6. An apparatus as claimed in any preceding claim, wherein the combining comprises at least one of:

   using the first output for the first frequency range and the second output for the second frequency range; and
   applying a weighting to the first output and the second output so that the first output has a higher weighting than the second output in a frequency range and the second output has a higher weighting than the first output in another frequency range.

7. An apparatus as claimed in any preceding claim, wherein the means are for determining an orientation of the microphone arrangement and applying a mode of at least one of the first spatial audio processing or the second spatial audio processing based on the determined orientation.

8. An apparatus as claimed in claim 7, wherein at least one of the first frequency range or the second frequency range are different for different modes of first spatial audio processing or the second spatial audio processing.

9. An apparatus as claimed in any of claim 7 or 8, wherein a first mode comprises using the first spatial audio processing for the first frequency range and a second spatial audio processing for the second frequency range and a second mode comprises using the first spatial audio processing for both the first frequency range and the second frequency range.

10. An apparatus as claimed in any of claims 7 to 9, wherein a first mode uses a first set of coefficients for the second spatial audio processing and a second mode uses a second set of coefficients for the second spatial audio processing.

11. An apparatus as claimed in any preceding claim, wherein the means are for adjusting at least one of the first spatial audio processing or the second spatial audio processing based on a head orientation of a listener.

12. A method comprising:
    obtaining at least two audio signals based on signals from at least two microphones;

    performing a first spatial audio processing of the obtained audio signals for at least a first frequency range to generate a first output;
    performing a second spatial audio processing of the obtained audio signals for at least a second frequency range to generate a second output, wherein the signal processing operations of the first spatial audio processing comprises processing based on parametric audio and the signal processing operations of the second spatial audio processing comprises processing based on beamforming audio; and
    combining the first output and the second output to generate a combined output.

13. A method as claimed in claim 12, wherein the processing based on parametric audio varies more over time than the processing based on beamforming audio.

14. A method as claimed in any of claim 12 or 13, wherein the combining comprises at least one of:

    using the first output for the first frequency range and the second output for the second frequency range; and
    applying a weighting to the first output and the second output so that the first output has a higher weighting than the second output in a frequency range and the second output has a higher weighting than the first output in another frequency range.

15. A method as claimed in any of claims 12 to 14, wherein the means are for adjusting at least one of the first spatial audio processing or the second spatial audio processing based on a head orientation of a listener.

**Fig. 1**

**Fig. 2**

Fig. 3

Fig. 4

Fig. 5

Fig. 6A

Fig. 6B

700

702

PROCESSOR

102

MEMORY

104

COMPUTER
PROGRAM

116

704

Fig. 7

Europäisches
Patentamt

European
Patent Office

Office européen
des brevets

# EUROPEAN SEARCH REPORT

**Application Number**

EP 24 21 8554

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/394606 A1 (TAMMI MIKKO [FI] ET AL) 26 December 2019 (2019-12-26) | 1-7, 11-14 | INV. H04R3/00 |
| Y | * paragraph [0060] - paragraph [0127] * | 10,15 | H04R5/04 |
| A | * paragraph [0140] - paragraph [0151] * * figures 2,3,5A-6 * | 8,9 | H04S7/00 |
| | ----- | | ADD. |
| Y | US 2012/128160 A1 (KIM LAE-HOON [US] ET AL) 24 May 2012 (2012-05-24) | 10,15 | H04R1/40 |
| A | * paragraph [0046] - paragraph [0049]; figures 1-5 * | 8,9 | |
| | ----- | | |
| A | US 2021/195068 A1 (VILERMO MIIKKA TAPANI [FI] ET AL) 24 June 2021 (2021-06-24) * paragraph [0130] - paragraph [0132]; figure 2 * | 8-10,15 | |
| | ----- | | |

**TECHNICAL FIELDS SEARCHED (IPC)**

H04R
H04S

The present search report has been drawn up for all claims

| Place of search | Date of completion of the search | Examiner |
|---|---|---|
| The Hague | 14 April 2025 | Streckfuss, Martin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 21 8554

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2025

| Patent document cited in search report | Publication date | Patent family member(s) | Publication date |
|---|---|---|---|
| US 2019394606 A1 | 26-12-2019 | CN 110537221 A | 03-12-2019 |
| | | EP 3583596 A1 | 25-12-2019 |
| | | GB 2559765 A | 22-08-2018 |
| | | KR 20190125987 A | 07-11-2019 |
| | | US 2019394606 A1 | 26-12-2019 |
| | | WO 2018154175 A1 | 30-08-2018 |
| US 2012128160 A1 | 24-05-2012 | CN 103181192 A | 26-06-2013 |
| | | EP 2633697 A1 | 04-09-2013 |
| | | JP 5762550 B2 | 12-08-2015 |
| | | JP 6121481 B2 | 26-04-2017 |
| | | JP 2014501064 A | 16-01-2014 |
| | | JP 2015213328 A | 26-11-2015 |
| | | KR 20130116271 A | 23-10-2013 |
| | | US 2012128160 A1 | 24-05-2012 |
| | | WO 2012061149 A1 | 10-05-2012 |
| US 2021195068 A1 | 24-06-2021 | CN 113014797 A | 22-06-2021 |
| | | EP 3840403 A1 | 23-06-2021 |
| | | GB 2590504 A | 30-06-2021 |
| | | US 2021195068 A1 | 24-06-2021 |
| | | US 2023007147 A1 | 05-01-2023 |

EPO FORM P0459

For more details about this annex : see Official Journal of the European Patent Office, No. 12/82